# EUROPÄISCHE PATENTSCHRIFT

(11) **EP 1 138 238 B1**
(45) Veröffentlichungstag und Bekanntmachung des Hinweises auf die Patenterteilung: **17.09.2003**
(21) Anmeldenummer: 01101542.7
(22) Anmeldetag: 24.01.2001
(51) Int. Cl.: A47J 43/07, A47L 9/26, H02G 11/02

(54) **Kabelwickeleinrichtung für ein Haushaltsgerät**
Cable storage device for household appliance
Dispositif de rangement du câble d'un appareil domestique

(30) Priorität: 31.03.2000 DE 10016289
(43) Veröffentlichungstag der Anmeldung: 04.10.2001
(73) Patentinhaber: BSH Bosch und Siemens Hausgeräte GmbH, 81669 München (DE)
(72) Erfinder: Pavlovic, Henrik, 3333 Ljubno, Savinji (SI); Brezovnik, Peter, 3330 Mozirje (SI)

(56) Entgegenhaltungen:
- EP-A- 0 063 217
- EP-A- 0 679 600
- DE-A- 2 729 259
- DE-A- 19 542 454
- US-A- 5 950 272

## Beschreibung

Die Erfindung betrifft ein elektrisches Gerät, insbesondere Haushaltsgerät, wie Küchenmaschine, Entsafter oder dergleichen, mit einem am Gerätegehäuse vorgesehenen Aufnahmeraum für das Anschlusskabel des Gerätes, in den das Anschlusskabel über eine Einführöffnung zumindest weitestgehend seitlich zuführbar einbringbar ist und aus dem das Anschlusskabel mit seinem entsprechenden Ende durch eine Ausleitöffnung in das Innere des Gerätegehäuses geführt ist.

Bei einem auf dem Markt befindlichen Toaster ist seitlich am Gehäuse ein Aufnahmeraum für das Anaschlusskabel des Toasters vorgesehen. Zum Boden des Toaster hin weist der Aufnahmeraum eine Einführöffnung auf, durch die das Anschlusskabel in den Aufnahmeraum eingeschoben werden kann. Hierzu muss das Anschlusskabel vorher knäuelartig zusammengefaltet werden und kann als Ganzes durch die Einführöffnung in den Aufnahmeraum eingeschoben werden. Dies ist relativ mühsam, da das zusammengefaltete Kabel immer wieder aufspreizt, wodurch das Durchschieben durch die Einführöffnung behindert wird. Der Anschlussstecker des Anschlusskabels hängt nach dem Einschieben des Kabels in den Aufnahmeraum lose aus der Einführöffnung heraus. Über eine Ausleitöffnung ist das Anschlusskabel von dem Aufnahmeraum aus in das Innere des Toastergehäuses zu den elektrischen Heizelementen geführt. Eine Haushaltsgerät gemäß dem Oberbegriff des Anspruch 1 ist aus EP-A-679600 bekannt.

Der Erfindung liegt die Aufgabe zugrunde, ein elektrisches Gerät der eingangs beschriebenen Art so weiterzubilden, dass das Einbringen des Anschlusskabels mit einfachen konstruktiven Maßnahmen ermöglicht ist.

Die Lösung der gestellten Aufgabe gelingt durch die Merkmale des Anspruch 1.

Durch die Einführöffnung kann das Anschlusskabel leicht in den Aufnahmeraum eingeschoben werden. Dabei wird das Anschlusskabel durch das Ablenkelement in den Innenbereich seitlich des Aufnahmeraumes umgelenkt und so eine Fältelung des nach und nach eingeschobenen Anschlusskabels ggf über mehrere Lagen erreicht, so dass das Anschlusskabel in voller Länge Platz in dem Aufnahmeraum findet und das Einschieben des Anschlusskabels leichtgängig und auf Anhieb möglich ist. Durch das Ablenkelement wird im Zusammenwirken mit dem Aufnahmeraum eine platzsparende Fältelung des Anschlusskabels innerhalb des Aufnahmeraums erreicht, wodurch dieser volumenoptimiert und damit platzsparend ausbildbar ist.

Weitere vorteilhafte Ausbildungen sind in den Unteransprüchen gekennzeichnet.

Dadurch, dass am Boden des Aufnahmeraumes eine kreisrunde Muldenvertiefung ausgebildet ist, wird das Zusammenfalten des Anschlusskabels beim Einschieben desselben in den Aufnahmeraum noch in besonderer Weise begünstigt. Günstig auf die Faltenbildung wirkt sich auch aus, dass die Ausleitöffnung auf der zum Einführungsschlitz hin liegenden Seite des Aufnahmeraumes seitlich beabstandet zum Einführungsschlitz vorgesehen ist.

Ein undefiniertes Heraushängen des Anschlusssteckers aus der Einführöffnung nach dem Einschieben des Anschlusskabels in den Aufnahmeraum wird dadurch unterbunden, dass der Anschlussstecker des Anschlusskabels mittels eines an ihm angeformten, sich in Richtung des Kabelaustrittes aus dem Steckergehäuse erstreckenden Griffelementes in dem Einführungschlitz verrastbar ist.

Eine Verrastung des Anschlusssteckers läßt sich auf konstruktiv einfache Weise dadurch erzielen, dass am freien Ende des Griffelementes als Rastelement ein Wulst angeformt ist, der mit einer an entsprechender Stelle des Einführungsschlitzes ausgebildeten Rastnase verrastbar ist.

Anhand eines in der Zeichnung dargestellten Ausführungsbeispieles wird die Erfindung nachfolgend noch näher erläutert.

Es zeigen:

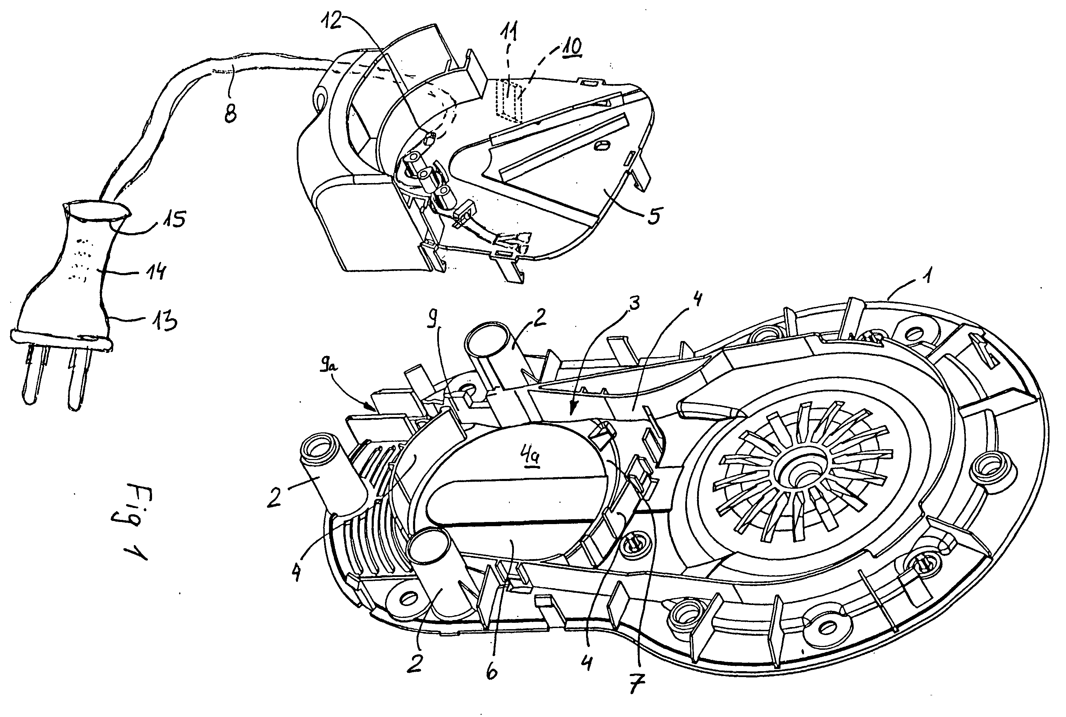

- Fig. 1: in perspektivischer Darstellung den unteren Gehäuseteil einer Küchenmaschine mit einem durch ein Deckelteil verschließbaren Aufnahmeraum bei abgenommenem Deckelteil und
- Fig. 2: den unteren Gehäuseteil nach Fig. 1 mit auf den Aufnahmeraum aufgesetztem Deckelteil und in den Aufnahmeraum eingeschobenem Anschlusskabel.

Mit 1 ist der untere Gehäuseteil einer Küchenmaschine bezeichnet. In dem schmäleren hinteren Bereich dieses Gehäuseteiles 1 sind drei Sockelelemente 2 für die Aufnahme eines nicht gezeigten elektrischen Antriebes der Küchenmaschine vorgesehen. Im Bereich zwischen den Sockelelementen 2 ist seitlich der Aufnahme für den elektrischen Antrieb ein Kabelraum 3 vorgesehen, welcher aus einem durch Wandbereiche 4 umgrenzten am Gehäuseteil 1 mitangeformten ersten Raumabschnitt 4a und einem zweiten als aufschnappbaren Deckelteil ausgebildeten Raumabschnitt 5 zum Verschließen des Raumabschnitts 4 a gebildet. Am Boden des Kabelraumes 3 ist eine kreisrunde Muldenvertiefung 6 ausgeformt, deren Seitenrand 7 schräg ansteigend verläuft.

Zum Einbringen des Anschlusskabels 8 der Küchenmaschine in den Kabelraum 3 ist an dem Gehäuseteil 1 eine zumindest annähernd tangential mündende Einführöffnung 9 und ein dazu vorgelagerter Einführkanal 9a vorgesehen, der tangential in den annähernd kreisförmig ausgeführten Kabelraum 3 mündet. In Verlängerungsrichtung des Einführkanales 9a ist in unmittelbarer Nachbarschaft zu diesem, an dem Raumabschnitt 5 ein flächig ausgebildetes Ablenkelement 10 angebracht, welches mit seiner Ablenkfläche 11 in einem stumpfen Winkel zur Einführrichtung des Anschlusskanals 8 schräg zum Innern des Kabelraumes 3 weist. Das Ablenkelement 10 kann wahlweise auch an entsprechender Stelle der den Raumabschnitt 4b umgrenzenden Wandteile 3 angeordnet sein.

Über eine am Raumabschnitt 5 vorhandene Austrittsöffnung 12 ist das Anschlusskabel 8 aus dem Kabelraum 3 heraus zu dem elektrischen Antrieb geführt. Die Austrittsöffnung 12 ist an dem Raumabschnitt 5 gegenüber dem Einführkanal 9a seitlich beabstandet angeordnet und liegt außerdem auf der dem Einführkanal 9a benachbarten Seite des Kabelraumes 3. Somit wird eine mäanderähnliche Faltenbildung des Anschlusskabels 8 beim Einschieben desselben in den Kabelraum 3 nicht durch den am Raumabschnitt 5 festgelegten Abschnitt des Anschlusskabels 8 behindert.

Ein Anschlussstecker 13 am Anschlusskabel 8 ist mit einem sich in Richtung des Kabelaustrittes aus dem Steckergehäuse erstreckenden Griffelement 14 versehen. Am freien Ende des Griffelementes 14 ist ein Wulst 15 angeformt. Mittels dieses Wulstes 15 kann der Anschlussstecker 13 nach dem vollständigen Einschieben des Anschlusskabels 8 in den Kabelraum 3 mit entsprechenden im Bereich des Einführkanales 9a vorgesehenen Rastnasen verrastet werden, so dass der Anschlussstecker 13 definiert am Gehäuse der Küchenmaschine gehalten ist.

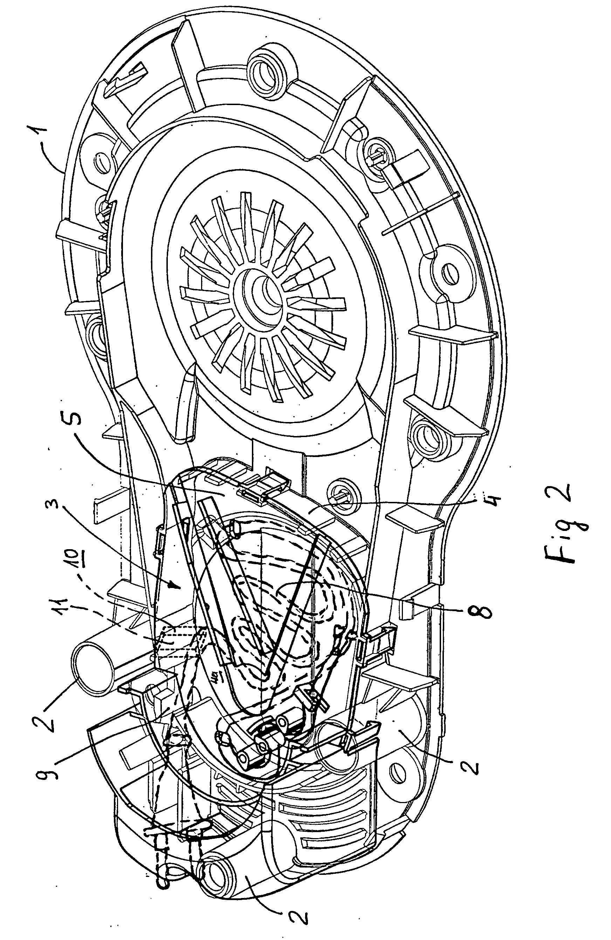

Soll nach Gebrauch der Küchenmaschine das Anschlusskabel 8 verräumt werden, dann geschieht dies durch einfaches Einschieben desselben in den Kabelraum 3. Dabei erhält das Anschlusskabel 8 durch den Einführkanal 9a eine gewisse Führung und tritt tangential zu dem an den Einführkanal 9a anschließenden Wandteil 4 in den Kabelraum 3 ein. Dabei trifft das Anschlusskabel 8 auf die Ablenkfläche 11 des am Raumabschnitt 5 oder gegebenenfalls auch an dem Wandteil 4 selbst vorgesehenen Ablenkelementes 10. Durch diese schräg nach innen in den Kabelraum 3 weisende Ablenkfläche 11 wird das Anschlusskabel 8 beim Einschieben zum Innern des Kabelraumes 3 hin in dessen Aufnahmebereich abgelenkt, so dass es nach einer Umlenkung am Wandteil 4 zu einer Faltenbildung kommt. Beim weiteren Einschieben des Anschlusskabels 8 wird dann diese Faltenbildung auch in mehreren Lagen übereinander fortgesetzt, so dass das Anschlusskabel 8 schließlich vollständig zusammengefaltet in dem Kabelraum 3 zu liegen kommt, wie dies in Fig. 2 angedeutet ist. Die Faltung des Anschlusskabels 8 wird beim Einschieben durch die kreisrunde Muldenvertiefung 6, an deren schrägem Seitenrand 7 das Anschlusskabel 8 entlanggleitet, noch begünstigt.

Nach dem vollständigen Einschieben des Anschlusskabels 8 wird auch noch der Anschlussstecker 13 in den Einführkanal 9a hineingedrückt und, wie bereits beschrieben, durch Verrasten in dem Einführkanal 9a gehalten. Damit ist ein vollständiges Verräumen des Anschlusskabels 8 gegeben, ohne dass noch irgendwelche Teile lose herumhängen.

## Patentansprüche

1. Haushaltsgerät mit einem Gerätegehäuse (1) und einem Kabelraum (3) für ein elektrisch am Haushaltsgerät kontaktierbares Anschlusskabel (8), das über eine Einführöffnung (9) seitlich in einen Aufnahmebereich des Kabelraums (3) einbringbar ist, **dadurch gekennzeichnet, dass** die Einführöffnung (9) zumindest annähernd tangential in den Kabelraum (3) mündet und ein Ablenkelement (10) der Einführöffnung (9) nachgelagert ist, welches das in den Kabelraums (3) eingeführte Anschlusskabel (8) zum Inneren des Kabelraums (3) hin in dessen Aufnahmebereich umlenkt.

2. Haushaltsgerät nach Anspruch 1, **dadurch gekennzeichnet, dass** der Eintrittsöffnung (9) ein Einführkanal (9a) vorgelagert ist und das Ablenkelement (10) in Verlängerung des Einführkanals (9a) der Eintrittsöffnung (9) in deren Nahbereich nachgelagert ist.

3. Haushaltsgerät nach Anspruch 1 oder 2, **dadurch gekennzeichnet, dass** das Ablenkelement (10) als Ablenkfläche (11) ausgebildet ist, welche in einem stumpfen Winkel zur Einführrichtung des Anschlusskabels (8) angeordnet und zumindest zu einem Teil in den durch die Einführöffnung (9) und den Einführkanal (9a) vorgegebenen Einführweg des Anschlusskabels (8) in den Kabelraum (3) gestellt ist.

4. Haushaltsgerät nach einem der Ansprüche 1 bis 3, **dadurch gekennzeichnet, dass** der Kabelraum (3) durch einen am Gerätegehäuse (1) angeordneten ersten Wandabschnitt (4a) und einen dem Wandabschnitt (4a) gegenüberliegenden weiteren Wandabschnitt (5) begrenzt ist.

5. Haushaltsgerät nach Anspruch 4, **dadurch gekennzeichnet, dass** der erste Wandafaschnitt (4a) mit dem Einführkanal (9a) versehen ist und der weitere Wandabschnitt (5) ein Deckelteil bildet, welches das Ablenkelement (10) aufweist und lösbar mit dem Gerätegehäuse (1) verbindbar ist.

6. Haushaltsgerät nach Anspruch 4 oder 5, **dadurch gekennzeichnet, dass** der am Gerätegehäuse (1) angeordnete Wandabschnitt (4a) eine zumindest annähernd kreisförmige, muldenartige Vertiefung (6) besitzt.

7. Haushaltsgerät nach einem der Ansprüche 2 bis 6, **dadurch gekennzeichnet, dass** im Einführkanal (9a) eine Verrastung vorgesehen ist, welche einen Anschlussstecker (13) des Anschlusskabels (8) mittels eines am Anschlussstecker (13) angeformten Griffelementes (14) im Einführkanal (9a) hält.

8. Haushaltsgerät nach Anspruch 7, **dadurch gekennzeichnet, dass** an einem dem Anschlusskabel (8) zugewandten Ende des Griffelementes (14) ein Wulst (15) angeformt ist, der ein Rastelement bildet, das mit einer an entsprechender Stelle des Einführkanals (9a) ausgebildeten Rastnase verrastbar ist.

9. Haushaltsgerät nach einem der Ansprüche 1 bis 8, **dadurch gekennzeichnet, dass** das elektrisch am Haushaltsgerät kontaktierbare Ende des Anschlusskabels (8) seitlich neben der Einführöffnung (9) im Kabelraum (3) angeordnet ist.

10. Haushaltsgerät nach einem der Ansprüche 1 bis 8, **dadurch gekennzeichnet, dass** das elektrisch am Haushaltsgerät kontaktierbare Ende des Anschlusskabels (8) über eine Austrittsöffnung (12), welche im Nahbereich seitlich neben der Einführöffnung (9) angeordnet ist, aus dem Kabelraum (3) austritt.

## Claims

1. Domestic appliance with an appliance housing (1) and a cable space (3) for a connecting cable (8), which can be electrically contacted with the domestic appliance and which can be laterally introduced into a receiving region of the cable space (3) by way of an introduction opening (9), **characterised in that** the introduction opening (9) opens at least approximately tangentially into the cable space (3) and a deflecting element (10) is arranged downstream of the introduction opening (9) and deflects the connecting cable (8), which is introduced into the cable space (3), towards the interior of the cable space (3) in the receiving region thereof.

2. Domestic appliance according to claim 1, **characterised in that** an introduction channel (9a) is arranged upstream of the entry opening (9) and the deflecting element (10) is arranged downstream of the entry opening (9) in the vicinity thereof and in prolongation of the introduction channel (9a).

3. Domestic appliance according to claim 1 or 2, **characterised in that** the deflecting element (10) is formed as a deflecting surface (11) which is arranged at an obtuse angle with respect to the introduction direction of the connecting cable (8) and is set for at least a part in the introduction path, which is predetermined by the introduction opening (9) and the introduction channel (9a), of the connecting cable (8) into the cable space (3).

4. Domestic appliance according to one of claims 1 to 3, **characterised in that** the cable space (3) is bounded by a first wall section (4a) arranged at the appliance housing (1) and a further wall section (5) opposite the wall section (4a).

5. Domestic appliance according to claim 4, **characterised in that** the first wall section (4a) is provided with the introduction channel (9a) and the further wall section (5) forms a cover part which has the deflecting element (10) and is detachably connectible with the appliance housing (1).

6. Domestic appliance according to claim 4 or 5, **characterised in that** the wall section (4a) arranged at the appliance housing (1) has an at least approximately circular, trough-like depression (6).

7. Domestic appliance according to one of claims 2 to 6, **characterised in that** a detent is provided in the introduction channel (9a) and retains a connecting plug (13) of the connecting cable (8) in the introduction channel (9a) by means of a grip element (14) integrally formed at the connecting plug (13).

8. Domestic appliance according to claim 7, **characterised in that** a bead (15) is integrally formed at an end of the grip element (14) facing the connecting cable (8) and forms a detent element which can be detented with a detent nose formed at a corresponding position of the introduction channel (9a).

9. Domestic appliance according to one of claims 1 to 8, **characterised in that** the end of the connecting cable (8) electrically contactable with the domestic appliance is arranged laterally adjacent to the introduction opening (9) in the cable space (3).

10. Domestic appliance according to one of claims 1 to 8, **characterised in that** the end of the connecting cable (8) electrically contactable with the domestic appliance exits from the cable space (3) by way of an exit opening (12) arranged in the laterally adjacent vicinity of the introduction opening (9).

## Revendications

1. Appareil domestique avec une enveloppe (1) et un espace pour câble (3) pour un câble de raccordement (8) pouvant établir un contact électrique au niveau de l'appareil domestique et pouvant être introduit latéralement, par un orifice d'introduction (9), dans un logement de l'espace pour câble (3), **caractérisé en ce que** ledit orifice d'introduction (9) débouche du moins sensiblement tangentiellement dans l'espace pour câble (3) et **en ce qu'**un élément de changement de direction (10) est situé à la suite de l'orifice d'introduction (9), lequel fait changer de direction au câble de raccordement (8) introduit dans l'espace pour câble (3) pour le diriger vers l'intérieur de l'espace pour câble (3) dans le logement prévu dans celui-ci.

2. Appareil domestique selon la revendication 1, **caractérisé en ce que** l'orifice d'introduction (9) est précédé d'un canal d'introduction (9a) et **en ce que** l'élément de changement de direction (10) dans le prolongement du canal d'introduction (9a) est situé à la suite de l'orifice d'introduction (9) et à proximité de ce dernier.

3. Appareil domestique selon la revendication 1 ou 2, **caractérisé en ce que** l'élément de changement de direction (10) est réalisé sous la forme d'une surface de changement de direction (11), laquelle est placée de manière à former un angle obtus par rapport à la direction de l'introduction du câble de raccordement (8) et se trouve, du moins en partie, dans le chemin pris par le câble de raccordement (8) lors de son introduction dans l'espace pour câble (3), lequel est défini par l'orifice d'introduction (9) et le canal d'introduction (9a).

4. Appareil domestique selon l'une des revendications 1 à 3, **caractérisé en ce que** l'espace pour câble (3) est limité par une première partie de paroi (4a) située au niveau de l'enveloppe de l'appareil (1) et une autre partie de paroi (5) située en regard de la partie de paroi (4a).

5. Appareil domestique selon la revendication 4, **caractérisé en ce que** la première partie de paroi (4a) est munie du canal d'introduction (9a) et **en ce que** l'autre partie de paroi (5) constitue une pièce servant de couvercle, laquelle présente l'élément de changement de direction (10) et peut être assemblée de manière détachable avec l'enveloppe de l'appareil (1).

6. Appareil domestique selon la revendication 4 ou 5, **caractérisé en ce que** la partie de paroi (4a) située au niveau de l'enveloppe de l'appareil (1) possède un enfoncement (6) du moins sensiblement circulaire en forme de cuvette.

7. Appareil domestique selon l'une des revendications 2 à 6, **caractérisé en ce qu'**est prévu dans le canal d'introduction (9a) un enclenchement qui maintient une fiche de raccordement (13) du câble de raccordement (8) dans le canal d'introduction (9a) au moyen d'un élément de prise (14) formé sur la fiche de raccordement (13).

8. Appareil domestique selon la revendication 7, **caractérisé en ce qu'**à une extrémité de l'élément de prise (14) regardant le câble de raccordement (8) est formé un renflement (15) constituant un élément d'enclenchement qui peut s'enclencher avec un ergot d'enclenchement réalisé à un endroit approprié du canal d'introduction (9a).

9. Appareil domestique selon l'une des revendications 1 à 8, **caractérisé en ce que** l'extrémité du câble de raccordement (8) pouvant établir un contact électrique au niveau de l'appareil domestique est située latéralement à côté de l'orifice d'introduction (9) dans l'espace pour câble (3).

10. Appareil domestique selon l'une des revendications 1 à 8, **caractérisé en ce que** l'extrémité du câble de raccordement (8) pouvant établir un contact électrique au niveau de l'appareil domestique sort de l'espace pour câble (3) par un orifice de sortie (12) aménagé à côté de l'orifice d'introduction (9), latéralement et à proximité de ce dernier.
